# FASCICULE DE BREVET EUROPEEN

(11) **EP 3 300 970 B1**
(45) Date de publication et mention de la délivrance du brevet: **10.07.2019**
(21) Numéro de dépôt: 17183439.3
(22) Date de dépôt: 27.07.2017
(51) Int. Cl.: B60S 1/52, B60S 1/54, B60S 1/56, G02B 27/00

(54) **DISPOSITIF DE NETTOYAGE D'UN CAPTEUR OPTIQUE, SYSTEME D'ASSISTANCE A LA CONDUITE ET PROCEDE DE NETTOYAGE ASSOCIES**
REINIGUNGSVORRICHTUNG EINES OPTISCHEN SENSORS, ENTSPRECHENDES STEUERASSISTENZSYSTEM UND ENTSPRECHENDES REINIGUNGSVERFAHREN
DEVICE FOR CLEANING AN OPTICAL SENSOR, AND ASSOCIATED DRIVER ASSISTANCE SYSTEM AND CLEANING METHOD

(30) Priorité: 29.09.2016 FR 1659284
(43) Date de publication de la demande: 04.04.2018
(73) Titulaire: Valeo Systèmes d'Essuyage, 78322 Le Mesnil Saint Denis (FR)
(72) Inventeur: LE-CALVEZ, Gilles, 78322 LE MESNIL SAINT DENIS (FR); TREBOUET, Marcel, 78322 LE MESNIL SAINT DENIS (FR); BRETAGNOL, Frédéric, 63500 ISSOIRE (FR); GRASSO, Giuseppe, 63500 ISSOIRE (FR); KOLANOWSKI, Grégory, 63500 ISSOIRE (FR)
(74) Mandataire: Callu-Danseux, Violaine

(56) Documents cités:
- WO-A1-2015/157744
- DE-A1-102014 220 257
- US-A1- 2015 203 076

## Description

La présente invention se rapporte au domaine de l'aide à la conduite et notamment aux systèmes d'assistance à la conduite, implantés sur certains véhicules. Le système d'assistance à la conduite peut comporter un capteur optique, comme par exemple une caméra comprenant une lentille. Plus particulièrement, l'invention concerne un dispositif de nettoyage d'un tel capteur optique, et un procédé de nettoyage d'un capteur optique mis en oeuvre par ce dispositif de nettoyage, le capteur optique pouvant être disposé à l'intérieur d'un élément de carrosserie d'un véhicule automobile par exemple.

Le document US 2015/203076 A1 est considéré comme l'état de la technique le plus proche de l'objet de la revendication 1.

Actuellement, des caméras de vision avant, arrière, ou encore latérales équipent un grand nombre de véhicules automobiles. Elles font notamment partie des systèmes d'assistance à la conduite, tels que les systèmes d'aide au stationnement ou les systèmes de détection de franchissement de ligne par exemple.

On connaît des caméras qui sont installées à l'intérieur de l'habitacle, contre la lunette arrière par exemple, pour l'aide au stationnement. Ces caméras sont bien protégées des aléas climatiques extérieurs et des salissures qui peuvent être causées par des polluants organiques ou minéraux. De telles caméras peuvent en outre bénéficier des systèmes de dégivrage et de nettoyage de la lunette arrière par exemple, comme un fil chauffant intégré dans la lunette arrière qui peut assurer le dégivrage de la lunette arrière et du capteur optique installé dans cette configuration.

Cependant, l'angle de vue proposé par de telles caméras n'est pas optimal, notamment pour une aide au stationnement, car elles ne permettent pas de voir les obstacles se trouvant à proximité de l'arrière du véhicule par exemple. C'est en partie pour cette raison que l'on préfère installer ces systèmes d'assistance à la conduite à l'extérieur de l'habitacle, à différents endroits selon l'utilisation souhaitée, comme par exemple au niveau de la plaque d'immatriculation ou dans les rétroviseurs extérieurs.

Dans un tel cas, le système d'assistance à la conduite, et en particulier la caméra d'un tel système, est fortement exposé aux aléas climatiques ainsi qu'aux projections de salissures organiques ou minérales. Par temps de pluie, ou en cas de neige par exemple, on constate des projections de pluie, de saletés, de sel ou encore de neige qui peuvent grandement affecter l'opérabilité du système d'assistance à la conduite, voire même le rendre inopérant.

Il apparaît donc nécessaire de nettoyer régulièrement ces systèmes d'assistance à la conduite afin d'assurer une bonne opérabilité de ces derniers.

Toutefois, si le véhicule comprend plusieurs systèmes d'assistance à la conduite comprenant des capteurs optiques, la quantité de liquide de nettoyage nécessaire pour assurer leur bonne opérabilité peut être importante, ce qui implique que le réservoir de liquide de nettoyage doit être suffisamment grand pour éviter à l'utilisateur du véhicule de devoir remplir trop souvent le réservoir de liquide de nettoyage.

De plus, l'augmentation du volume de liquide de nettoyage à l'intérieur du véhicule va augmenter sa masse et donc augmenter ses consommations énergétiques.

On connaît du document EP2252481 un système d'assistance à la conduite équipé d'un capteur optique et comportant un dispositif de nettoyage de ce capteur optique présentant une buse de projection d'un liquide de nettoyage. La buse de projection selon ce document est mobile en dessous du capteur optique entre une position escamotée et une position de nettoyage. La buse de projection est configurée pour pulvériser sur l'optique de celui-ci un liquide de nettoyage.

Cependant, un tel dispositif de nettoyage ne peut pas être utilisé de manière simultanée à l'utilisation du système d'assistance à la conduite car la buse de projection, lorsque celle-ci est en position de nettoyage, est située dans le champ de vision du capteur optique. Ainsi, lors des phases de nettoyage du capteur optique, celui-ci est inopérant. Par ailleurs, un tel dispositif de nettoyage semble utiliser des quantités relativement importantes de liquide de nettoyage du fait de la pulvérisation de ce liquide de nettoyage.

D'autre part, on connaît du document FR2861348, au nom de la demanderesse, un dispositif de nettoyage d'un capteur optique installé dans un boîtier de protection de celui-ci comportant une fenêtre de vision. Le dispositif de nettoyage comprend une buse de projection d'un liquide de nettoyage permettant de projeter du liquide de nettoyage sur la fenêtre de vision du boîtier de protection.

Cependant, il est possible qu'un tel dispositif de nettoyage consomme des quantités assez importantes de liquide de nettoyage.

On connaît également du document FR2858280, au nom de la demanderesse, un dispositif de vision arrière pour véhicule automobile présentant un capteur optique à l'intérieur d'un boîtier de protection. Le boîtier de protection comprend une fenêtre de vision disposée face à l'optique du capteur optique et des moyens de nettoyage de cette fenêtre de vision. Les moyens de nettoyage décrits dans ce document présentent par exemple un joint racleur permettent d'essuyer la fenêtre de vision du boîtier de protection, installée devant le capteur optique.

Cependant, de tels moyens de nettoyage risquent de ne pas être suffisamment efficaces dans le cas de salissures incrustées sur la fenêtre de vision. Par ailleurs, la présence du joint racleur peut créer des micro-rayures sur la fenêtre de vision et à plus ou moins long terme ces micro-rayures peuvent nuire à la bonne opérabilité du dispositif de vision arrière.

La présente invention se propose de remédier au moins partiellement aux inconvénients de l'état de la technique mentionnés ci-dessus en proposant un dispositif de nettoyage d'un capteur optique, destiné à être installé sur un véhicule automobile, permettant un nettoyage efficace dudit capteur optique.

Un autre objectif de la présente invention, distinct du premier, est de proposer un dispositif de nettoyage d'un capteur optique présentant une faible consommation en liquide de nettoyage.

Un autre objectif de la présente invention, distinct des précédents objectifs, est de proposer un système d'assistance à la conduite présentant un dispositif de nettoyage permettant au capteur optique équipant un tel système d'assistance à la conduite d'avoir un fonctionnement optimisé quelles que soient les conditions climatiques.

A cet effet, l'invention a pour objet un dispositif de nettoyage d'un capteur optique installé dans un boîtier, notamment destiné à équiper un véhicule automobile, comprenant une buse de distribution d'un liquide de nettoyage, la buse de distribution du liquide de nettoyage étant de type goutte-à-goutte et est configurée pour déposer par gouttes individuelles du liquide de nettoyage sur le capteur optique,
caractérisé en ce que le dispositif de nettoyage comprend en outre un élément de projection mobile entre :- une position escamotée dans laquelle l'élément de projection est configuré pour être positionné hors du champ de vision du capteur optique, et- au moins une position de nettoyage dans laquelle l'élément de projection est configuré pour être positionné devant le capteur optique.

Ainsi, le dispositif de nettoyage peut être installé sur tout type de capteur optique comprenant une optique, comme une caméra comprenant une lentille, destiné à équiper un véhicule automobile, comme par exemple des capteurs optiques installés à l'intérieur d'éléments de carrosserie ou encore des capteurs optiques installés à l'extérieur du véhicule.

On entend par « salissures » aussi bien des traces de polluants organiques, comme des insectes, ou minéraux, comme de la boue, que des traces laissées par des gouttes d'eau par exemple.

Lorsqu'il pleut par exemple, des salissures risquent de se déposer sur l'optique du capteur optique et peuvent nuire au bon fonctionnement dudit capteur optique. Le dispositif de nettoyage peut commander le nettoyage de ce capteur optique de manière efficace sans nécessairement utiliser de grandes quantités de liquide de nettoyage grâce au dépôt d'une ou de plusieurs goutte(s) de liquide de nettoyage sur l'optique du capteur optique.

Le dispositif de nettoyage du capteur optique selon l'invention peut comporter en outre une ou plusieurs des caractéristiques suivantes prises seules ou en combinaison :
Le dispositif de nettoyage comporte un support de la buse de distribution du liquide de nettoyage ledit support étant disposé de manière fixe par rapport au dispositif de nettoyage.

La buse de distribution du liquide de nettoyage peut être configurée pour être montée mobile dans le support entre :
- une position de repos dans laquelle la buse de distribution est configurée pour être en retrait par rapport à une optique du capteur optique, et
- une position active dans laquelle la buse de distribution est configurée pour être située au-dessus de l'optique du capteur optique de manière à déposer ladite au moins une goutte de liquide de nettoyage sur l'optique du capteur optique par gravité.

Le dispositif de nettoyage peut comprendre une pompe doseuse configurée pour alimenter la buse de distribution en liquide de nettoyage afin de déposer un volume prédéfini de liquide de nettoyage goutte par goutte sur le capteur optique.

Selon un mode de réalisation particulier, la buse de distribution peut être montée mobile de manière télescopique pour passer de sa position de repos à sa position active.

Selon un autre mode de réalisation, la buse de distribution peut être montée mobile en translation pour passer de sa position de repos à sa position active.

Lorsque l'élément de projection occupe une position de nettoyage, il est situé entre l'optique et un ou plusieurs objets dont le capteur optique transmet les images.

L'élément de projection comprend une buse de projection d'un flux d'air comprimé configurée pour projeter un flux d'air comprimé sur l'optique lorsque l'élément de projection est dans une position de nettoyage.

Selon une variante, l'élément de projection peut comprendre une lame souple configurée pour permettre un nettoyage par action mécanique de l'optique du capteur optique.

Le dispositif de nettoyage peut comprendre un mécanisme d'entraînement configuré pour déplacer l'élément de projection entre sa position escamotée et ladite au moins une position de nettoyage.

Selon une variante, le mécanisme d'entraînement peut comprendre au moins un actionneur relié directement à l'élément de projection de manière à déplacer l'élément de projection entre sa position escamotée et une position de nettoyage.

Selon une autre variante, le mécanisme d'entraînement peut comprendre au moins un actionneur et un système de couplage configuré pour être entraîné par l'au moins un actionneur de manière à déplacer l'élément de projection entre sa position escamotée et une position de nettoyage.

Selon cette autre variante, l'actionneur coopère avec le système de couplage à l'aide d'au moins un des éléments choisis dans la liste suivante : un galet d'entraînement, un système d'engrenages complémentaires, une courroie, un système avec pignon et crémaillère.

L'élément de projection peut être mobile en rotation entre sa position escamotée et ladite au moins une position de nettoyage.

La présente invention a également pour objet un système d'assistance à la conduite comprenant au moins un dispositif de nettoyage tel que décrit précédemment, au moins un capteur optique, et au moins une unité électronique de contrôle configurée pour commander le dispositif de nettoyage.

L'utilisation d'un tel système d'assistance à la conduite permet de s'abstenir d'effectuer un nettoyage manuel de l'optique du capteur optique afin d'éliminer des salissures incrustées et de conserver une bonne opérabilité du système d'assistance à la conduite.

Le système d'assistance à la conduite selon l'invention peut comprendre en outre une ou plusieurs des caractéristiques suivantes prises seules ou en combinaison.

L'unité électronique de contrôle peut être configurée pour commander le mécanisme d'entraînement, de manière à déplacer l'élément de projection entre sa position escamotée et ladite au moins une position de nettoyage.

L'unité électronique de contrôle peut être configurée pour déclencher la projection du flux d'air comprimé sur l'optique lorsque l'élément de projection est dans une position de nettoyage et pour stopper ladite projection du flux d'air comprimé lorsque l'élément de projection est revenu en position escamotée.

Selon une variante, l'unité électronique de contrôle peut être configurée pour contrôler la pression de projection du flux d'air comprimé sur l'optique du capteur optique.

L'unité électronique de contrôle peut être configurée pour contrôler le volume de liquide de nettoyage aspiré par la pompe doseuse et déposé en goutte-à-goutte sur l'optique du capteur optique.

L'invention a également pour objet un procédé de nettoyage d'un capteur optique composant un système d'assistance à la conduite tel que décrit précédemment, caractérisé en ce qu'il comprend les étapes suivantes :
- mise en mouvement de l'élément de projection pour amener ledit élément de projection dans au moins une position de nettoyage,
- dépôt d'au moins une première goutte de liquide de nettoyage sur l'optique du capteur optique, et
- projection d'un premier flux d'air comprimé sur l'optique.

Le procédé de nettoyage du capteur optique selon l'invention, en utilisant par exemple une seule goutte de liquide de nettoyage, permet de s'abstenir d'utiliser de grandes quantités de liquide de nettoyage afin de permettre un état de propreté satisfaisant pour que le capteur optique conserve une bonne opérabilité quelles que soient les conditions climatiques.

L'utilisation d'un premier flux d'air comprimé sous la forme d'une lame sous pression par exemple permet de décoller et d'éjecter les salissures qui peuvent s'être déposées sur l'optique du capteur optique afin que celui-ci conserve une bonne opérabilité. Ainsi, l'utilisation de la projection d'un flux d'air comprimé en complément du liquide de nettoyage permet, entre autre, de diminuer encore les volumes nécessaires de liquide de nettoyage pour avoir un nettoyage efficace de l'optique d'un tel capteur optique.

Le procédé selon l'invention peut également comprendre en outre les étapes suivantes prises seules ou en combinaison :
- dépôt d'au moins une deuxième goutte de liquide de nettoyage sur l'optique du capteur optique,
- projection d'un deuxième flux d'air comprimé, ledit deuxième flux d'air comprimé étant projeté avec une pression inférieure à celle du premier flux d'air comprimé, sur l'optique du capteur optique, et
- mise en mouvement de l'élément de projection pour amener ledit élément de projection de ladite au moins une position de nettoyage vers la position escamotée.

D'autre part, le liquide de nettoyage utilisé au cours de ce procédé peut comprendre un adjuvant configuré pour déposer une couche de protection sur l'optique afin de faciliter le nettoyage de cette optique.

Le dépôt d'une deuxième goutte de liquide de nettoyage ainsi que la projection du deuxième flux d'air comprimé permet de mettre en oeuvre une étape de traitement préventif afin de déposer une couche de protection sur l'optique pour limiter les possibilités d'adhésion des salissures sur celle-ci ou encore pour faciliter leur élimination. En effet, le deuxième flux d'air permet d'étaler la goutte de liquide de nettoyage sur l'optique et lorsque le liquide de nettoyage présente un adjuvant, celui-ci peut déposer une couche de protection sur l'optique sur laquelle les salissures viennent se déposer. La couche de protection peut être semi-soluble, ce qui permet de l'éliminer ainsi que les salissures déposées dessus par simple mouillage.

D'autres avantages et caractéristiques apparaîtront à la lecture de la description ainsi que des dessins annexés dans lesquels :
- la figure 1 est une représentation schématique d'un système d'assistance à la conduite monté dans un élément de carrosserie d'un véhicule automobile et comprenant un dispositif de nettoyage d'un capteur optique,
- la figure 2 est une représentation schématique latérale du dispositif de nettoyage montrant plus en détail un élément de projection du dispositif de nettoyage,
- la figure 3 est une représentation schématique arrière en perspective du système d'assistance à la conduite de la figure 2 présentant le dispositif de nettoyage avec l'élément de projection dans une position escamotée,
- la figure 4 est une représentation schématique partielle en perspective de l'élément de projection,
- la figure 5A est une représentation schématique avant partielle en perspective du système d'assistance à la conduite comportant une buse de distribution présentant une extrémité de dépôt de forme rectangulaire,
- la figure 5B est une représentation schématique avant partielle en perspective du système d'assistance à la conduite comportant une buse de distribution présentant une extrémité de dépôt de forme ovale,
- la figure 5C est une représentation schématique avant partielle en perspective du système d'assistance à la conduite comportant une buse de distribution présentant une extrémité de dépôt de forme circulaire,
- la figure 6 est une représentation schématique en perspective du système d'assistance à la conduite de la figure 2 présentant le dispositif de nettoyage avec l'élément de projection dans une première position de nettoyage,
- la figure 7 est une représentation schématique en perspective du système d'assistance à la conduite de la figure 6 présentant le dispositif de nettoyage avec l'élément de projection dans une position de nettoyage intermédiaire,
- la figure 8 est une représentation schématique en perspective du système d'assistance à la conduite des figures 6 et 7 présentant le dispositif de nettoyage avec l'élément de projection dans une position finale de nettoyage,
- la figure 9A est une représentation schématique avant du système d'assistance à la conduite avec l'élément de projection en position escamotée,
- la figure 9B est une représentation schématique avant du système d'assistance à la conduite avec l'élément de projection dans sa position finale de nettoyage,
- la figure 10 est une représentation schématique en perspective et en coupe partielle du système d'assistance à la conduite de la figure 9B,
- la figure 11 est un diagramme de fonctionnement du dispositif de nettoyage selon un premier mode de réalisation, et
- la figure 12 est un diagramme de fonctionnement du dispositif de nettoyage selon un deuxième mode de réalisation.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à une première et à une deuxième goutte de liquide de nettoyage, ou encore à un premier et à un deuxième flux d'air comprimé. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier le fonctionnement du dispositif de nettoyage du capteur optique.

Dans la description suivante, on entend par « salissures » aussi bien des gouttes d'eau que des traces de polluants organiques, tels que des insectes par exemple, ou minéraux, tels que des traces de boue par exemple.

Dans la description suivante, on entend par « haut », « supérieur », et « au-dessus » la disposition de ces éléments sur les figures qui correspond généralement à leur disposition à l'état monté dans un élément de carrosserie d'un véhicule automobile. Dans la description suivante, on entend par « lame d'air comprimé » la projection d'air comprimé sous forte pression afin d'éjecter les salissures qui pourraient être incrustées sur l'optique du capteur optique. De même, on entend par « filet d'air comprimé » la projection d'air comprimé sous faible pression afin d'étaler uniquement le liquide de nettoyage sur l'optique et de permettre ainsi le séchage de l'optique du capteur optique.

Par ailleurs, dans la description suivante, on entend par « pompe doseuse » une pompe servant à injecter de façon précise et répétable de petites quantités de liquides ou de fluides plus ou moins visqueux suivant un cycle défini.

De plus, dans la description suivante, on entend par « branchement » ou « connecteur », un élément permettant d'amener un liquide de nettoyage vers une buse de distribution afin que celle-ci puisse déposer au moins une goutte de liquide de nettoyage sur une optique d'un capteur optique.

Enfin, dans la description suivante, on entend par « adjuvant » un produit que l'on ajoute à un autre pour en améliorer ou en changer certaines propriétés. Dans le cas présent, l'adjuvant peut être déjà présent dans le liquide de nettoyage ou ajouté à celui-ci et il permet de changer certaines propriétés du liquide de nettoyage.

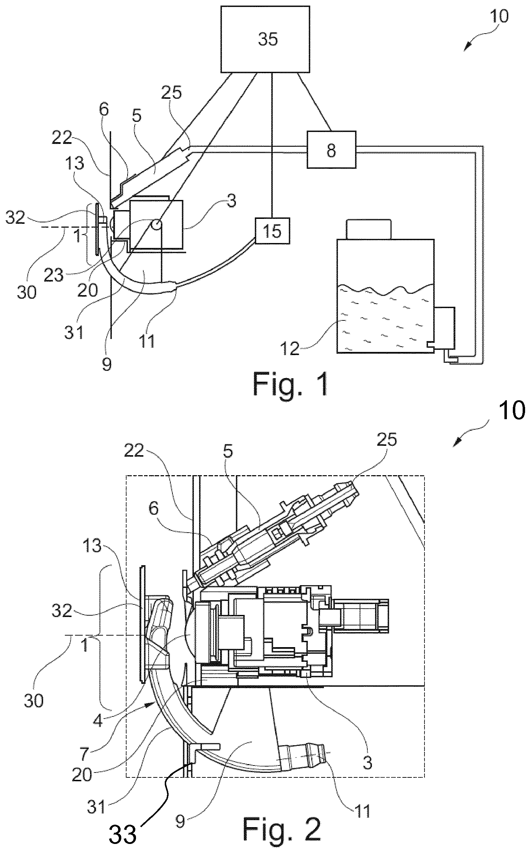

En référence aux figures 1 et 2, il est représenté un système d'assistance à la conduite 10 comprenant un capteur optique 3 présentant une optique 4 et un dispositif de nettoyage 1 du capteur optique 3, notamment destiné à équiper un véhicule automobile.

Avantageusement, le capteur optique 3 est porté par le dispositif de nettoyage 1. Selon le mode de réalisation représenté aux figures 1, 2 et 6 à 10, le capteur optique 3 est une pièce rapportée au dispositif de nettoyage 1. À cet effet, le dispositif de nettoyage 1 comprend un boîtier 20 présentant un logement configuré pour accueillir le capteur optique 3. Ce boîtier 20 est par exemple installé dans un élément de carrosserie 22 du véhicule automobile.

Selon le mode de réalisation particulier des figures 1 et 2, le capteur optique 3 est installé dans le boîtier 20 de sorte que l'optique 4 de ce capteur optique 3 fait saillie de cet élément de carrosserie 22 afin de proposer un grand angle de vue. Toutefois, selon un autre mode de réalisation non représenté ici, le boîtier 20 portant le capteur optique 3 peut être installé à l'extérieur du véhicule. Le dispositif de nettoyage 1 selon les figures 1 et 2 permet en outre au capteur optique 3 de conserver une bonne opérabilité quelles que soient les conditions climatiques et également de conserver un état de propreté satisfaisant pour assurer son bon fonctionnement.

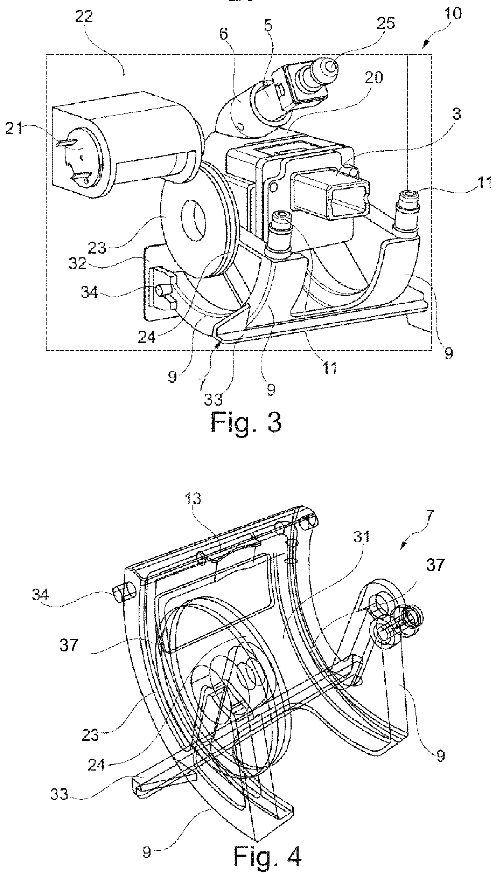

Plus particulièrement, le dispositif de nettoyage 1 comprend une buse de distribution 5 d'un liquide de nettoyage. Le dispositif de nettoyage 1 comprend avantageusement une pompe doseuse 8 permettant d'alimenter la buse de distribution 5 en liquide de nettoyage en provenance d'un réservoir de liquide de nettoyage 12 prévu dans le véhicule automobile. Le dispositif de nettoyage 1 peut encore comprendre un élément de projection 7 (mieux visible sur les figures 3 et 4) décrit plus en détail ultérieurement.

Autrement dit, la pompe doseuse 8 est configurée pour pomper le liquide de nettoyage du réservoir de liquide de nettoyage 12 vers la buse de distribution 5 du liquide de nettoyage. Le réservoir de liquide de nettoyage 12 est donc en communication fluidique avec la buse de distribution 5 de liquide de nettoyage.

Selon le mode de réalisation des figures 1 et 2, la buse de distribution 5 présente un branchement 25 configuré pour être relié à la pompe doseuse 8 afin de permettre la mise en communication fluidique du réservoir de liquide de nettoyage 12 avec la buse de distribution 5

La pompe doseuse 8 peut être une pièce distincte de la buse de distribution 5.

En alternative, la pompe doseuse 8 peut être incluse dans la buse de distribution 5.

Selon une variante, la pompe doseuse 8 peut être de type piézoélectrique.

En outre, la buse de distribution 5 du liquide de nettoyage est de type goutte-à-goutte. En référence à la figure 2, cette buse de distribution 5 comprend une extrémité configurée pour déposer une goutte ou plusieurs gouttes de liquide de nettoyage en goutte-à-goutte sur l'optique 4 du capteur optique 3. Selon ce mode de réalisation particulier, une goutte de liquide de nettoyage correspond à un volume de 100 µL de liquide de nettoyage lorsque l'optique 4 présente un diamètre de 15 mm. L'utilisation de tels volumes pour le nettoyage de l'optique 4 permet de limiter fortement la consommation en liquide de nettoyage du dispositif de nettoyage 1.

Par ailleurs, selon le mode de réalisation illustré sur les figures 1 à 3 et 9A, la buse de distribution 5 est montée de manière fixe sur le boîtier 20. À cet effet, le boîtier 20 comporte un support 6 pour recevoir la buse de distribution 5. Ce support 6, est dans cet exemple, disposé de manière fixe par rapport au boîtier 20.

Selon d'autres variantes, la buse de distribution 5 peut être montée mobile par rapport au support 6.

Ainsi, selon une première variante de réalisation, la buse de distribution 5 peut être configurée pour être montée mobile dans le support 6 entre une position de repos et une position active. En position de repos, la buse de distribution 5 est avantageusement en retrait par rapport à l'optique 4 du capteur optique 3, par exemple la buse de distribution 5 peut être dans une position reculée. En revanche, en position active, tel qu'illustré sur la figure 1 ou 2, la buse de distribution 5 est située au-dessus de l'optique 4 à l'état monté du dispositif de nettoyage 1 sur un véhicule automobile par exemple. Dans cette position active, une goutte ou plusieurs gouttes de liquide de nettoyage sont déposées sur l'optique 4 par gravité afin de permettre au liquide de nettoyage de s'étaler sur l'optique 4 et de mouiller les salissures qui peuvent s'être incrustées sur l'optique 4 afin de désorber ces salissures et de faciliter ainsi leur élimination.

Selon une deuxième variante, la buse de distribution 5 est montée mobile dans le support 6, de manière télescopique par rapport à l'optique 4 du capteur optique 3.

Selon une troisième variante de réalisation non représentée ici, la buse de distribution 5 peut être montée mobile en translation par rapport au capteur optique 3. Cette mobilité de la buse de distribution 5 permet de protéger celle-ci de la projection de particules solides, comme des petits graviers par exemple, qui pourraient obstruer la buse de distribution 5 et ainsi nuire à son bon fonctionnement.

En revenant au mode de réalisation particulier des figures 1 et 2, quelle que soit la position de la buse de distribution 5, cette dernière n'est pas dans le champ de vision du capteur optique 3. Ainsi, elle n'apparaît pas sur les images transmises par le capteur optique 3 à l'utilisateur et ne gêne donc pas le bon fonctionnement du capteur optique 3.

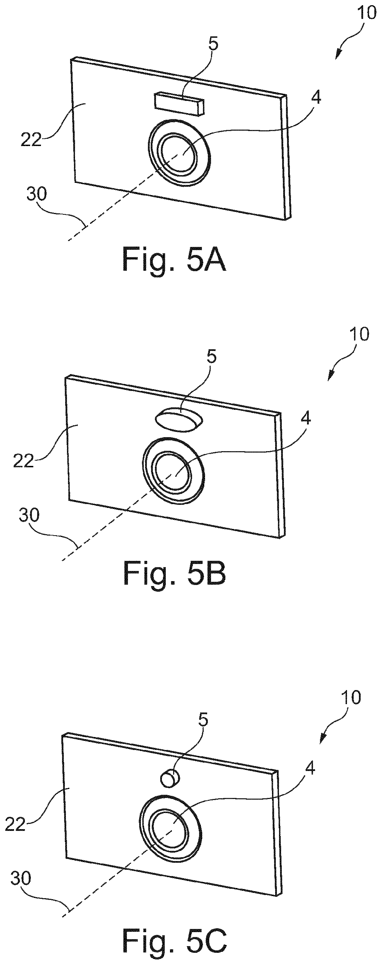

En référence aux figures 5A à 5C, l'extrémité de la buse de distribution 5 est disposée de façon à permettre le dépôt d'au moins une goutte de liquide de nettoyage présente une ouverture, par exemple de forme sensiblement rectangulaire (figure 5A), ovale (figure 5B), ou encore circulaire (figure 5C), dont les dimensions sont choisies suffisantes pour que la ou les gouttes déposées sur l'optique 4 du capteur optique 3 puissent recouvrir une grande surface de l'optique 4 et se distribuer facilement pour mouiller ensuite l'ensemble de cette optique 4. En particulier, l'ouverture de la buse de distribution 5 est prévue assez large et de préférence au moins aussi large que l'optique 4.

Par ailleurs, la buse de distribution 5 est selon l'exemple de la figure 1, alimentée par la pompe doseuse 8 en liquide de nettoyage, afin de déposer un volume prédéfini de liquide de nettoyage goutte par goutte sur l'optique 4 du capteur optique 3. L'utilisation d'une telle pompe doseuse 8 permet de réduire la consommation en liquide de nettoyage d'un tel dispositif de nettoyage 1. En effet, la pompe doseuse 8 permet d'aspirer uniquement la quantité nécessaire de liquide de nettoyage dans le réservoir de liquide de nettoyage 12 afin de déposer une, ou plusieurs, goutte(s) de liquide de nettoyage sur l'optique 4. Par ailleurs, l'absence de projection sous pression de ce liquide de nettoyage peut également permettre d'éviter les pertes de celui-ci liées à sa pulvérisation. En effet, lorsque le liquide de nettoyage est pulvérisé sur l'optique 4, des gouttes peuvent rebondir sur cette optique 4 et être directement éjectées, ce qui peut entraîner un gaspillage du liquide de nettoyage, une utilisation en plus grandes quantités pour obtenir un nettoyage efficace de l'optique 4, et donc un fonctionnement du dispositif de nettoyage 1 assez onéreux.

Enfin, le liquide de nettoyage utilisé peut présenter une viscosité supérieure à celle de l'eau par exemple comprise entre 0,001 et 10 Pascal-secondes (Pa.s). L'utilisation d'un liquide de nettoyage présentant une telle viscosité permet à celui-ci de s'étaler relativement lentement sur l'optique 4, c'est-à-dire de façon à permettre au liquide de nettoyage d'enrober la salissure et de l'humidifier suffisamment pour réduire son adhésion sur l'optique 4, favorisant ainsi sa désincrustation.

Par ailleurs, le liquide de nettoyage utilisé présente avantageusement une tension superficielle comprise entre 17 et 75 (10-3 x Newton.m-1) permettant ainsi un très bon mouillage de la surface de l'optique 4 et des salissures qui peuvent être présentes sur celle-ci.

Le liquide de nettoyage peut également présenter un pouvoir détergent élevé afin d'améliorer son efficacité pour désincruster les salissures présentes sur l'optique 4. Par ailleurs, le liquide de nettoyage peut comprendre un adjuvant optiquement transparent configuré pour déposer une couche de protection lorsque le liquide de nettoyage s'étale sur l'optique 4 du capteur optique 3 afin de pouvoir prévenir et limiter l'adhésion des salissures sur cette optique 4 et également faciliter le nettoyage de cette optique 4. De manière préférée, cet adjuvant optiquement transparent est un composé de la famille des polyéthylène glycols. Cet adjuvant permet le dépôt d'une couche de protection sur l'optique 4. Cette couche de protection est avantageusement soluble et les salissures viennent se déposer dessus. Lorsqu'il pleut, ou qu'une goutte de liquide de nettoyage est déposée sur l'optique 4, cette couche de protection est dissoute et les salissures présentes sur cette couche de protection sont ainsi aisément éliminées.

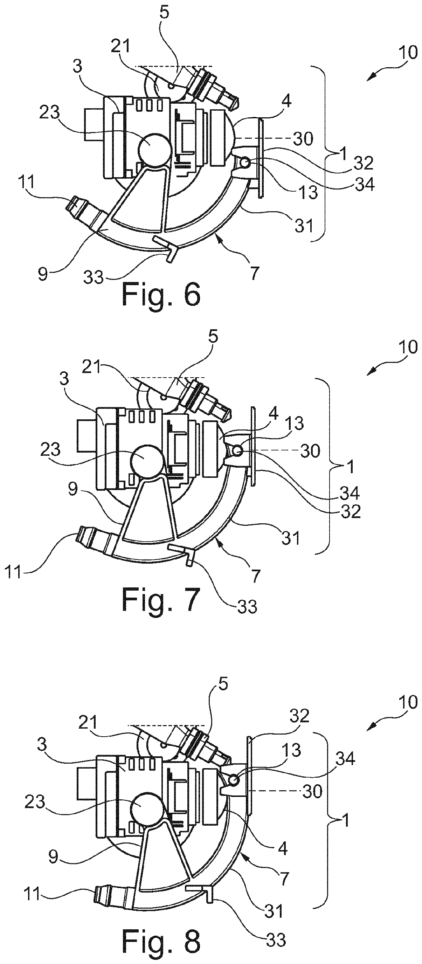

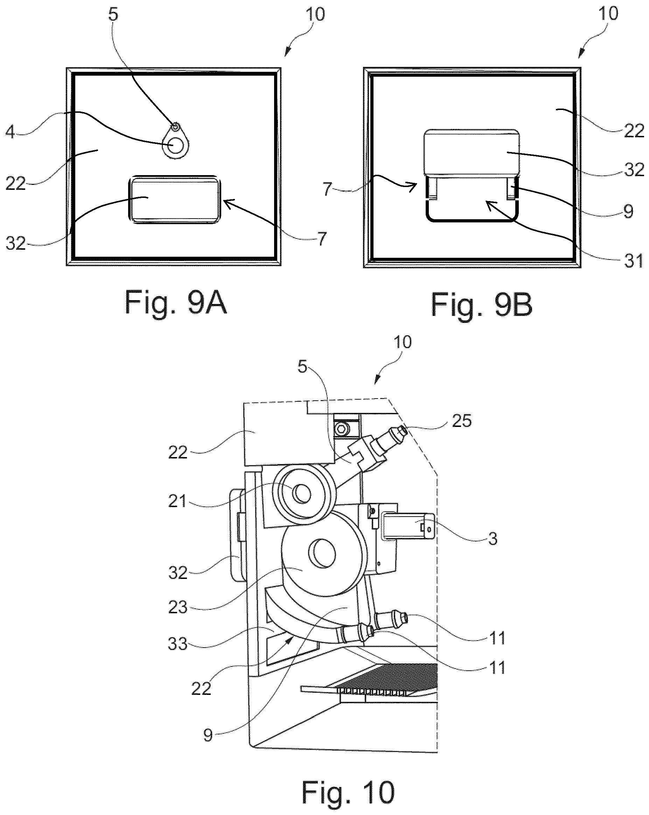

En ce qui concerne l'élément de projection 7 mieux visible sur la figure 4, il est avantageusement configuré pour être mobile entre une position escamotée (figures 3 et 9A) et au moins une position de nettoyage (figures 1, 2, 6 à 8, 9B, et 10). Selon les modes de réalisation décrits, l'élément de projection 7 est mobile entre une première position de nettoyage ou position basse (figure 6) et une position de finale de nettoyage ou position haute (figures 8 et 10), en passant par une ou plusieurs positions intermédiaires (figure 7).

Lorsque l'élément de projection 7 occupe sa position escamotée (figures 3 et 9A), il est configuré pour être positionné hors du champ de vision du capteur optique 3. Ceci permet d'éviter les problèmes qui pourraient être liés à la diffraction de la lumière ou encore à la déformation possible des images transmises. En revanche, lorsque l'élément de projection 7 occupe une des positions de nettoyage, il est positionné devant le capteur optique 3 (figures 1, 2, 6 à 8, 9B, et 10).

L'élément de projection 7 suit par exemple un mouvement ascendant quand il passe de sa position escamotée vers une de ses positions de nettoyage et un mouvement descendant quand il passe d'une de ses positions de nettoyage vers sa position escamotée.

Selon le mode de réalisation particulier des figures 6 à 8, l'élément de projection 7 est mobile en rotation selon un axe perpendiculaire à un axe optique 30 du capteur optique 3.

En se référant de nouveau à la figure 4, l'élément de projection 7 présente une paroi 31. Cette paroi 31 présente de part et d'autre des doigts 34 qui permettent l'installation de manière fixe ou mobile en rotation entre une position inactive et une position face caméra d'un volet 32 configuré pour venir devant le capteur optique 3 lorsque l'élément de projection 7 occupe une de ses différentes positions de nettoyage. Le volet 32 permet par exemple de limiter les turbulences aérodynamiques lorsque le liquide de nettoyage est déposé sur l'optique 4. Le volet 32 peut également assurer la rétro-diffusion du liquide de nettoyage vers le centre de l'optique 4, permettant ainsi le dépôt du liquide de nettoyage uniquement par gravité.

Selon une variante, le volet 32 peut être configuré pour venir se placer devant l'optique 4 lorsque le véhicule est en stationnement afin que les salissures ne puissent pas venir se déposer dessus et limiter ainsi son encrassement.

Selon le mode de réalisation particulier de la figure 9A, le volet 32 peut être intégré ou masqué dans l'élément de carrosserie 22.

Selon un mode de réalisation particulier non représenté ici, le volet 32 peut être réalisée en un matériau optiquement transparent afin que le capteur optique 3 reste partiellement opérationnel au cours du nettoyage de son optique 4.

Selon le mode de réalisation particulier de la figure 4, l'élément de projection 7 comprend une buse de projection 13 d'un flux d'air comprimé qui permet de projeter soit une lame d'air comprimé sur l'optique 4 afin d'enlever les salissures, soit de projeter un filet d'air comprimé sur cette optique 4 afin de sécher celle-ci et éventuellement d'étaler le liquide de nettoyage sur cette optique 4 afin de former une couche de protection pour limiter les possibilités d'adhérence des salissures sur cette optique 4.

Selon le mode de réalisation illustré, la buse de projection 13 est installée à l'extrémité de la paroi 31, alignée avec les doigts 34, et est distincte de cette paroi 31. Selon une variante non représentée ici, la paroi 31 peut comprendre la buse de projection 13.

Selon une variante non représentée ici, la paroi 31 peut comprendre la buse de distribution 5 de liquide de nettoyage.

Selon le mode de réalisation des figures 1 à 3 et 10, l'élément de projection 7 comprend une entrée d'air 11 configurée pour alimenter la buse de projection 13 portée par la paroi de confinement 31 en air comprimé, permettant ainsi à la buse de projection 13 de projeter un flux d'air comprimé sur l'optique 4. En référence aux figures 1 et 4, l'entrée d'air 11 est reliée à un compresseur 15 par exemple qui permet de générer l'air comprimé. L'air comprimé est ensuite amené jusqu'à la buse de projection en passant à travers des canaux 37, visibles sur la figure 4, qui s'étendent de part et d'autre de la paroi 31 entre les entrées d'air 11 et la buse de projection 13.

En référence à la figure 6, lorsque l'élément de projection 7 se trouve dans la première position de nettoyage, la buse de projection 13 peut projeter un flux d'air comprimé au niveau de la partie inférieure de l'optique 4.

En référence à la figure 7, lorsque l'élément de projection 7 occupe une autre position de nettoyage, qui correspond à une position de nettoyage intermédiaire, et suit un mouvement ascendant, la buse de projection 13 peut projeter une lame d'air comprimé au niveau du centre de l'optique 4.

Enfin, en référence à la figure 8, lorsque l'élément de projection 7 occupe une position de nettoyage finale, et plus précisément une position extrême comme cela est également représenté en référence à la figure 2, la buse de projection 13 peut projeter une lame d'air comprimé au niveau de la partie supérieure de l'optique 4.

Ainsi, la buse de projection 13 peut projeter une lame d'air comprimé sur l'ensemble de l'optique 4 grâce au mouvement de l'élément de projection 7 et permettre ainsi de décoller les différentes salissures qui peuvent s'être incrustées sur l'optique 4. La projection d'air comprimé sur l'optique 4 est réalisée selon l'exemple de réalisation particulier des figures 6 à 8 après le dépôt d'au moins une goutte de liquide de nettoyage sur cette optique 4. Le dépôt de cette goutte de liquide de nettoyage peut être réalisé lorsque l'élément de projection 7 trouve aussi bien dans sa première position de nettoyage (figure 6) que dans sa position extrême (figure 8).

Avantageusement, la buse de projection 13 présente un orifice de projection qui peut présenter une forme de lame conformée pour épouser dans le sens transversal la forme de l'optique 4 du capteur optique 3.

La buse de projection 13 peut être configurée pour moduler la pression de projection du flux d'air comprimé sur le capteur optique 3.

Selon le mode de réalisation particulier des figures 2, 3, 6 à 8, et 10, l'élément de projection 7 comporte des bras 9 en forme d'arc de cercle. Selon le mode de réalisation représenté, chaque bras 9 présente une entrée d'air 11 afin de permettre d'alimenter la buse de projection 13 en air comprimé à projeter sur l'optique 4 du capteur optique 3. En référence à la figure 4, les canaux 37 d'amenée de l'air comprimé peuvent être disposés à l'intérieur des bras 9.

Plus précisément, selon le mode de réalisation particulier des figures 3, 4, et 10, l'élément de projection 7 présente deux bras 9 arrangés de part et d'autre de la paroi 31.

Selon le mode de réalisation particulier représenté notamment aux figures 3 et 4, les bras 9 sont reliés à la buse de projection 13 afin de permettre à cette buse de projection 13 de se déplacer verticalement par rapport à l'optique 4, et de préférence sur l'ensemble de la hauteur de cette optique 4.

Par ailleurs, afin de mettre en mouvement l'élément de projection 7, le dispositif de nettoyage 1 comporte avantageusement un mécanisme d'entraînement 21, 23.

À titre d'exemple non limitatif et en référence aux figures 3 et 10, le mécanisme d'entraînement peut comporter un élément disposé à l'intérieur de l'élément de carrosserie 22 qui coopère avec un élément porté par l'élément de projection 7. Dans cet exemple, le mécanisme d'entraînement comporte un actionneur 21 disposé à l'intérieur de l'élément de carrosserie 22 et un système de couplage 23 porté par un des deux bras 9 de l'élément de projection 7. Les bras 9 permettent de relier la paroi 31 au système de couplage 23 afin de permettre la mise en rotation de l'élément de projection 7. Plus précisément, les bras 9 permettent de transmettre le mouvement de rotation du mécanisme d'entraînement à la paroi 31 de sorte que l'élément de projection 7 peut se déplacer de sa position escamotée vers une de ses différentes positions de nettoyage et inversement.

Selon le mode de réalisation particulier représenté aux figures 6 à 8 et 10, les bras 9 comportent chacun une butée 33 configurée pour venir en appui contre l'élément de carrosserie 22 dans lequel le dispositif de nettoyage 1 est installé lorsque l'élément de projection 7 est en fin de course de son mouvement ascendant (figure 10), c'est-à-dire lorsque la buse de projection 13 projette un flux d'air comprimé au niveau de la partie supérieure de l'optique 4. Une fois que la butée 33 est entrée en contact avec l'élément de carrosserie 22, l'actionneur 21 est configuré pour stopper sa rotation ou pour tourner en sens inverse afin de ramener l'élément de projection 7 dans sa position escamotée. Selon le mode de réalisation particulier des figures 3 et 4, le système de couplage 23 comporte un galet d'entraînement 24 sur sa surface externe. La présence de ce galet d'entraînement 24 assure la coopération du système de couplage 23 et de l'actionneur 21.

Selon un autre mode de réalisation non représenté ici, le système de couplage 23 et l'actionneur 21 présentent chacun une structure de type engrenage complémentaires l'une de l'autre qui permettent à ces deux éléments de coopérer ensemble.

Selon un autre mode de réalisation non représenté ici, le système de couplage 23 et l'actionneur 21 coopèrent à l'aide d'une courroie.

Selon encore un autre mode de réalisation non représenté ici, la coopération du système de couplage 23 et de l'actionneur 21 est assurée à l'aide d'un système avec pignon et crémaillère.

Selon une autre variante non représentée, l'actionneur 21 peut entraîner l'élément de projection 7 sans système de couplage 8 intermédiaire.

Selon encore une variante non représentée, l'élément de projection 7 peut être mis en mouvement avec le compresseur 15 qui projette de l'air comprimé avec une pression suffisante pour permettre le déplacement de cet élément de projection 7 en même temps qu'il alimente la buse de projection 13 en air comprimé.

Selon une variante de la figure 1 et de manière optionnelle, l'élément de projection 7 du dispositif de nettoyage 1 peut comprendre un joint racleur (non représenté). Ce joint racleur peut par exemple être composé en caoutchouc ou en polymère. Ce joint racleur peut contribuer à l'enlèvement des salissures qui peuvent s'être déposées sur le capteur optique 3 par une action mécanique. En effet, lors du mouvement de l'élément de projection 7, ce joint racleur peut venir frotter l'optique 4 du capteur optique 3, ce qui permet de faciliter l'élimination de ces salissures et donc d'augmenter l'efficacité du dispositif de nettoyage 1.

De manière optionnelle également, l'élément de projection 7 peut comprendre une conduite d'évacuation, non représentée ici, du liquide de nettoyage reliée à une enceinte de récupération. Selon cette variante, l'enceinte de récupération est en connexion fluidique avec le réservoir de liquide de nettoyage 12 afin de permettre le recyclage du liquide de nettoyage une fois qu'il a été utilisé pour nettoyer l'optique 4 du capteur optique 3. Dans une telle configuration, la conduite d'évacuation peut de manière optionnelle comprendre une unité de filtration afin de purifier le liquide de nettoyage recirculant. Selon ce mode de réalisation particulier, le dispositif de nettoyage 1 présente une pompe de recirculation (non représentée) configurée pour aspirer le liquide de nettoyage circulant à travers l'unité de filtration et ainsi le renvoyer vers le réservoir de liquide de nettoyage 12. Selon une variante, la pompe doseuse 8 et la pompe de recirculation peuvent être une même pompe.

En revenant sur la figure 1, le système d'assistance à la conduite 10 comporte au moins une unité électronique de contrôle 35. L'unité électronique de contrôle 35 est configurée pour commander le dispositif de nettoyage 1.

L'unité électronique de contrôle 35 peut aussi être configurée pour commander le mécanisme d'entraînement 21, 23 de manière à déplacer l'élément de projection 7 entre sa position escamotée et une de ses différentes positions de nettoyage.

L'unité électronique de contrôle 35 peut également être configurée pour déclencher la projection du flux d'air comprimé sur l'optique 4 lorsque l'élément de projection 7 est mis en mouvement à partir de sa position escamotée. L'unité électronique de contrôle 35 peut aussi être configurée pour stopper la projection du flux d'air comprimé lorsque l'élément de projection 7 est revenu en position escamotée. Avantageusement, l'unité électronique de contrôle 35 peut être configurée pour contrôler la pression de projection du flux d'air comprimé sur l'optique 4. Ainsi, l'unité électronique de contrôle 35 peut commander la projection d'une lame ou d'un filet d'air comprimé sur l'optique 4 à la buse de projection 13.

Par ailleurs, l'unité électronique de contrôle 35 peut également être configurée pour contrôler le volume de liquide de nettoyage aspiré par la pompe doseuse 8. Le contrôle de la pompe doseuse 8 permet de prélever dans le réservoir de liquide de nettoyage 12 et de déposer sur l'optique 4 uniquement le volume nécessaire au nettoyage de cette optique 4, comme par exemple le volume nécessaire au dépôt d'une goutte sur l'optique 4, ce qui permet au dispositif de nettoyage 1 d'avoir un fonctionnement plus économique que les dispositifs de nettoyage qui utilisent des systèmes de pulvérisation de liquide de nettoyage par exemple.

L'unité électronique de contrôle 35 peut également être configurée pour commander le déplacement de la buse de distribution 5 entre sa position de repos et sa position active et inversement.

L'unité électronique de contrôle 35 peut aussi être configurée pour commander le déplacement du volet 32 entre sa position inactive et sa position face caméra lorsque celui-ci est monté mobile en rotation sur les doigts 34 de la paroi 31.

De manière optionnelle, la buse de distribution 5 peut comprendre un élément chauffant contrôlé par l'unité électronique de contrôle 35 et configuré pour chauffer le liquide de nettoyage avant son dépôt sur l'optique 4. Un dégivrage de l'optique 4 peut être réalisé de cette manière et le capteur optique 3 peut conserver une bonne opérabilité quelles que soient les conditions climatiques.

L'unité électronique de contrôle 35 peut également comprendre des moyens de détection des salissures afin de commander le nettoyage de l'optique 4 de manière automatique, par exemple lorsque les moyens de détection des salissures détectent un état d'encrassement qui peut nuire à la qualité des images transmises et donc à la bonne opérabilité du capteur optique 3.

Selon un autre mode de réalisation non représenté, l'unité électronique de contrôle 35 peut être configurée pour commander le nettoyage de l'optique 4 lorsque l'utilisateur du véhicule passe la marche arrière par exemple quand le système d'assistance à la conduite 10 comprend une caméra installée à l'arrière d'un véhicule par exemple.

Selon une variante non représentée, l'unité électronique de contrôle 35 peut être commandée par l'utilisateur du véhicule lui-même.

En référence aux figures 6 à 12, on décrit plus en détail le procédé de nettoyage du capteur optique 3 mettant en oeuvre le dispositif de nettoyage 1 selon le mode de réalisation des figures 1 à 4.

Le procédé mis en oeuvre pour le nettoyage du capteur optique 3 peut comprendre une étape E1 d'activation de la buse de distribution 5. Au cours de cette étape E1, la pompe doseuse 8 est activée et commence à prélever du liquide de nettoyage dans le réservoir de liquide de nettoyage 12 du véhicule.

De manière optionnelle, cette étape peut également permettre le déplacement de la buse de distribution 5 de sa position de repos vers sa position active lorsque cette buse de distribution 5 est montée mobile dans le dispositif de nettoyage 1. En variante ou en complément, cette étape E1 peut également déclencher la chauffe de la buse de distribution 5 de manière à projeter du liquide de nettoyage chauffé sur l'optique 4.

Ensuite, le procédé comprend une étape E2 de mise en mouvement de l'élément de projection 7 pour mettre en mouvement l'élément de projection 7, en particulier selon un mouvement ascendant de la position escamotée (figure 9A) vers au moins la première position de nettoyage (figure 6). Le mouvement peut être continu jusqu'à la position finale de nettoyage (figures 8, 9B et 10). De manière optionnelle, cette étape E2 peut permettre le déplacement du volet 32 afin qu'il passe de sa position inactive à sa position face caméra lorsque le volet 32 est monté mobile en rotation sur les doigts 34.

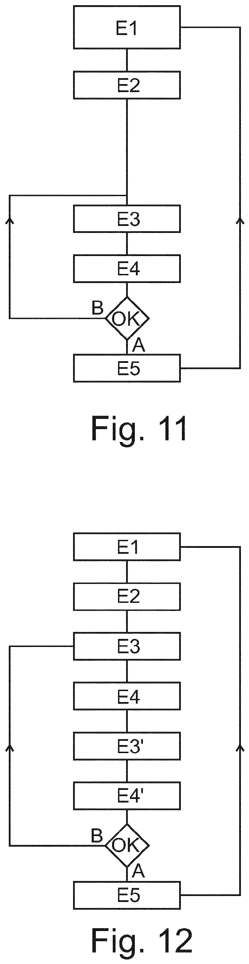

Le procédé selon la figure 11 comprend encore une étape E3 au cours de laquelle une première goutte de liquide de nettoyage est déposée par gravité sur l'optique 4 du capteur optique 3 lorsque l'élément de projection 7 occupe sa première position de nettoyage. Au cours de cette étape E3, la goutte de liquide de nettoyage s'étale sur l'optique 4 et mouille les différentes salissures afin de les désorber. Dans le cas où la couche de protection laissée par l'adjuvant est déjà présente, le dépôt de cette première goutte de liquide de nettoyage permet de dissoudre cette couche de protection et ainsi d'éliminer les salissures éventuelles qui peuvent s'être déposées dessus.

En variante, l'étape E3 peut être mise en oeuvre lorsque l'élément de projection 7 occupe sa position de nettoyage haute, comme en référence aux figures 2, 9B, et 10.

Le procédé de nettoyage comprend une étape E4 au cours de laquelle un premier flux d'air comprimé est projeté sur l'optique 4. Plus précisément, selon ce mode de réalisation et en référence à la figure 6, le premier flux d'air comprimé correspond à une lame d'air comprimé qui est projetée sur l'optique 4 afin de décoller les salissures présentes sur cette optique 4.

La projection de cette lame d'air comprimé peut débuter dès que l'élément de projection 7 quitte la position escamotée et passe dans la première position de nettoyage. Cette étape peut être mise en oeuvre après un laps de temps suffisant pour que la goutte de liquide de nettoyage déposée lors de l'étape E3 ait eu le temps de ruisseler sur l'ensemble de l'optique 4 et d'humidifier les différentes salissures éventuellement présentes sur l'optique 4.

Cette étape E4 dure pendant le temps nécessaire du mouvement de l'élément de projection 7 pour qu'il passe par ses différentes positions de nettoyage comme cela est représenté en référence aux figures 6 à 8, de sorte que la lame d'air comprimé balaye l'ensemble de l'optique 4 et permet ainsi de décoller les différentes salissures qui ont pu s'incruster sur cette optique 4.

En variante, lorsque la goutte de liquide de nettoyage est déposée sur l'optique 4 et que l'élément de projection 7 est en position haute, l'étape E4 est mise en oeuvre en déplaçant l'élément de projection 7 de sa position haute vers sa position basse.

A la fin de cette étape E4, l'unité électronique de contrôle 35 peut être configurée pour évaluer l'état de propreté du capteur optique 3 grâce aux moyens de détection des salissures. Si l'état de propreté de l'optique 4 est satisfaisant (boucle A), l'unité électronique de contrôle 35 commande dans ce cas la mise en oeuvre d'une étape E5 qui correspond à la mise en mouvement de manière descendante de l'élément de projection 7 pour amener cet élément de projection 7 de la position de nettoyage dans laquelle il se trouve vers sa position escamotée (figure 9A). Dans ce cas, l'unité électronique de contrôle 35 peut commander également l'arrêt de la projection du flux d'air comprimé à la buse de projection 13. Selon le mode de réalisation particulier des figures 6 à 10, le volet 32 peut servir à stopper le fonctionnement du mécanisme d'entraînement 21, 23 lorsque l'élément de projection 7 est revenu dans sa position escamotée. Cependant, si l'état de propreté n'est pas jugé satisfaisant par les moyens de détection des salissures (boucle B), l'unité électronique de contrôle 35 peut répéter la séquence de nettoyage décrite précédemment.

Selon une variante, le procédé peut comprendre un cycle de traitement préventif à la suite du cycle de nettoyage.

En référence à la figure 12, ce cycle de traitement préventif comprend deux étapes supplémentaires E3' et E4' par rapport au cycle de nettoyage (étapes E1 à E4) précédemment décrit.

Dans ce cas, à la suite de l'étape E4 de projection de la lame d'air comprimé sur l'optique 4, une deuxième goutte de liquide de nettoyage est déposée sur l'optique 4 (étape E3'), suivie par une étape de séchage E4' de l'optique 4 à l'aide de la projection d'un deuxième flux d'air comprimé sur l'optique 4. Le deuxième flux d'air est projeté sur l'optique 4 avec une pression inférieure à celle du premier flux d'air comprimé. Plus précisément, lors de cette étape de séchage E4', le flux d'air comprimé projeté par la buse de projection 13 sur l'optique 4 correspond à un filet d'air comprimé. La projection de ce filet d'air comprimé permet de sécher l'optique 4. Avantageusement, l'utilisation d'un filet d'air comprimé pour sécher l'optique 4 permet également d'étaler le liquide de nettoyage sur cette optique 4 et éventuellement de former ainsi une couche de protection pour limiter les possibilités d'adhésion des salissures sur cette optique 4 si le liquide de nettoyage présente des propriétés permettant de réduire l'adhésion des salissures.

Après ces cycles de nettoyage (étapes E1 à E4) et de traitement préventif (étapes E3' et E4'), les moyens de détection de l'unité électronique de contrôle 35 peuvent évaluer de nouveau l'état de propreté de l'optique 4. Comme précédemment, si l'optique 4 présente un état de propreté suffisant (boucle A), l'élément de projection 7 est mis en mouvement par le mécanisme d'entraînement 21, 23 pour rejoindre sa position escamotée selon l'étape E5. Toutefois, si l'état de propreté n'est pas jugé satisfaisant (boucle B), l'unité électronique de contrôle 35 commande la mise en oeuvre d'un nouveau cycle de nettoyage mettant en oeuvre un nouveau cycle de nettoyage, en particulier les étapes E3 et E4 du cycle de nettoyage, et/ou un nouveau cycle de traitement préventif (étapes E3' et E4') tels que décrits ci-dessus.

Au cours de l'étape E5, la buse de distribution 5 peut également retrouver sa position de repos lorsque cette buse de distribution 5 est montée mobile dans le dispositif de nettoyage 1.

Avantageusement, la durée du cycle de nettoyage et du cycle de traitement préventif est comprise entre une et deux secondes, ce qui permet au système d'assistance à la conduite 10 d'être rapidement opérationnel lorsqu'un nettoyage du capteur optique 3 est nécessaire.

Ces exemples de réalisation sont fournis à titre illustratif et non limitatif. En effet, il est tout à fait possible pour l'homme de l'art sans sortir du cadre de la présente invention de remplacer l'actionneur par tout autre type d'actionneur permettant de déplacer l'élément de projection 7 de sa position escamotée vers sa position de nettoyage et inversement. Par ailleurs, il est tout à fait possible pour l'homme de l'art, sans sortir du cadre de la présente invention, d'utiliser un liquide de nettoyage présentant un indice de viscosité inférieur ou supérieur à celui décrit ici. De plus, il est tout à fait possible pour l'homme de l'art sans sortir du cadre de la présente invention de déposer plus d'une goutte de liquide de nettoyage sur l'optique 4, comme par exemple deux ou trois, sous forme de goutte-à-goutte par gravité. Ensuite, il est tout à fait possible pour l'homme de l'art d'inverser ou d'interchanger les étapes du procédé sans sortir du cadre de la présente invention, et notamment d'inverser l'étape E2 de mise en mouvement de l'élément de projection 7 vers une position de nettoyage et l'étape E3 de projection d'une goutte de liquide de nettoyage par exemple. Par ailleurs, il est tout à fait possible pour l'homme de l'art, sans sortir du cadre de la présente invention, d'utiliser tout autre type d'adjuvant optiquement transparent permettant de déposer une couche de protection semi-soluble sur l'optique 4 afin de prévenir son encrassement et de faciliter le nettoyage de cette optique.

Ainsi, le nettoyage rapide, efficace et économique de l'optique 4 d'un capteur optique 3, comme par exemple la lentille externe d'une caméra, destiné à équiper un véhicule automobile est possible grâce au dispositif de nettoyage 1 décrit ici. Avantageusement, lorsque l'utilisation de liquide de nettoyage est nécessaire, les quantités utilisées sont généralement faibles, ce qui permet de diminuer les coûts de fonctionnement d'un tel dispositif de nettoyage 1. De plus, il n'est pas nécessaire de prévoir un agrandissement du réservoir de stockage de ce liquide de nettoyage au regard des faibles consommations proposées par le dispositif de nettoyage 1.

## Revendications

1. Dispositif de nettoyage (1) d'un capteur optique (3), notamment destiné à équiper un véhicule automobile, comprenant une buse de distribution (5) d'un liquide de nettoyage, la buse de distribution (5) du liquide de nettoyage est de type goutte-à-goutte et est configurée pour déposer par gouttes individuelles du liquide de nettoyage sur le capteur optique (3), **caractérisé en ce que** le dispositif de nettoyage (1) comprend en outre un élément de projection (7) mobile entre :
- une position escamotée dans laquelle l'élément de projection (7) est configuré pour être positionné hors du champ de vision du capteur optique (3), et
- au moins une position de nettoyage dans laquelle l'élément de projection (7) est configuré pour être positionné devant le capteur optique (3).

2. Dispositif de nettoyage (1) d'un capteur optique (3) selon la revendication précédente, **caractérisé en ce qu'**il comporte un support (6) de la buse de distribution (5) du liquide de nettoyage, ledit support (6) étant disposé de manière fixe par rapport au dispositif de nettoyage (1).

3. Dispositif de nettoyage (1) d'un capteur optique (3) selon la revendication 2, **caractérisé en ce que** la buse de distribution (5) du liquide de nettoyage est montée mobile dans le support (6) entre :
- une position de repos dans laquelle la buse de distribution (5) est configurée pour être en retrait par rapport à une optique (4) du capteur optique (3) et
- une position active dans laquelle la buse de distribution (5) est configurée pour être située au-dessus de l'optique (4) du capteur optique (3), de manière à déposer ladite au moins une goutte de liquide de nettoyage sur l'optique (4) par gravité.

4. Dispositif de nettoyage (1) selon l'une quelconque des revendications précédentes, **caractérisé en ce que** le dispositif de nettoyage (1) comprend une pompe doseuse (8) configurée pour alimenter la buse de distribution (5) en liquide de nettoyage afin de déposer un volume prédéfini de liquide de nettoyage goutte par goutte sur le capteur optique (3).

5. Dispositif de nettoyage (1) d'un capteur optique (3) selon l'une quelconque des revendications précédentes, **caractérisé en ce que** l'élément de projection (7) comprend une buse de projection (13) d'un flux d'air comprimé configurée pour projeter un flux d'air comprimé sur l'optique (4) lorsque l'élément de projection (7) est dans une position de nettoyage.

6. Dispositif de nettoyage (1) d'un capteur optique (3) selon l'une quelconque des revendications précédentes, **caractérisé en ce que** le dispositif de nettoyage (1) comprend un mécanisme d'entraînement (21, 23) configuré pour déplacer l'élément de projection (7) entre sa position escamotée et ladite au moins une position de nettoyage.

7. Dispositif de nettoyage (1) selon l'une quelconque des revendications précédentes, **caractérisé en ce que** l'élément de projection (7) est mobile en rotation entre sa position escamotée et ladite au moins une position de nettoyage.

8. Système d'assistance à la conduite (10) comprenant au moins un dispositif de nettoyage (1) selon l'une quelconque des revendications précédentes, au moins un capteur optique (3), et au moins une unité électronique de contrôle (35) configurée pour commander le dispositif de nettoyage (1).

9. Système d'assistance à la conduite (10) selon la revendication 8 prise en combinaison avec la revendication 6, **caractérisé en ce que** l'unité électronique de contrôle (35) est configurée pour commander le mécanisme d'entraînement (21, 23), de manière à déplacer l'élément de projection (7) entre sa position escamotée et ladite au moins une position de nettoyage.

10. Système d'assistance à la conduite (10) selon l'une quelconque des revendications 8 ou 9, **caractérisé en ce que** l'unité électronique de contrôle (35) est configurée pour déclencher la projection du flux d'air comprimé sur l'optique (4) lorsque l'élément de projection (7) est dans une position de nettoyage et pour stopper ladite projection du flux d'air comprimé lorsque l'élément de projection (7) est en position escamotée.

11. Système d'assistance à la conduite (10) selon la revendication 10, **caractérisé en ce que** l'unité électronique de contrôle (35) est configurée pour contrôler la pression de projection du flux d'air comprimé sur l'optique (4) du capteur optique (3).

12. Système d'assistance à la conduite (10) selon l'une quelconque des revendications 8 à 11 prise en combinaison avec la revendication 3, **caractérisé en ce que** l'unité électronique de contrôle (35) est configurée pour contrôler le volume de liquide de nettoyage aspiré par la pompe doseuse (8) et déposé en goutte-à-goutte sur l'optique (4) du capteur optique (3).

13. Procédé de nettoyage d'un capteur optique (3) d'un système d'assistance à la conduite (10) selon l'une quelconque des revendications 8 à 12, **caractérisé en ce qu'**il comprend les étapes suivantes :
- mise en mouvement de l'élément de projection (7) pour amener ledit élément de projection (7) dans au moins une position de nettoyage,
- dépôt d'au moins une première goutte de liquide de nettoyage sur l'optique (4) du capteur optique (3), et
- projection d'un premier flux d'air comprimé sur l'optique (4).

14. Procédé de nettoyage d'un capteur optique (3) selon la revendication précédente, **caractérisé en ce qu'**il comprend en outre les étapes suivantes :
- dépôt d'au moins une deuxième goutte de liquide de nettoyage sur l'optique (4) du capteur optique (3),
- projection d'un deuxième flux d'air comprimé, ledit deuxième flux d'air comprimé étant projeté avec une pression inférieure à celle du premier flux d'air comprimé, sur l'optique (4) du capteur optique (3), et
- mise en mouvement de l'élément de projection (7) pour amener ledit élément de projection (7) de ladite au moins une position de nettoyage vers la position escamotée.

15. Procédé de nettoyage selon l'une quelconque des revendications 13 ou 14, **caractérisé en ce que** le liquide de nettoyage comprend un adjuvant configuré pour déposer une couche de protection sur l'optique (4) afin de faciliter le nettoyage de cette optique (4).

## Patentansprüche

1. Vorrichtung zur Reinigung (1) eines optischen Sensors (3), die insbesondere zur Ausrüstung eines Kraftfahrzeugs bestimmt ist, umfassend eine Düse zur Verteilung (5) einer Reinigungsflüssigkeit, die Düse zur Verteilung (5) der Reinigungsflüssigkeit vom Tropftyp ist und dafür ausgelegt ist, tropfenweise Reinigungsflüssigkeit auf den optischen Sensor (3) aufzutragen, **dadurch gekennzeichnet, dass** die Vorrichtung zur Reinigung (1) ferner ein Blaselement (7) umfasst, das zwischen folgenden Positionen bewegbar ist:
- einer eingefahrenen Position, in der das Blaselement (7) dafür eingerichtet ist, außerhalb des Sichtfelds des optischen Sensors (3) positioniert zu sein, und
- mindestens einer Reinigungsposition, in der das Blaselement (7) dafür eingerichtet ist, vor dem optischen Sensor (3) positioniert zu sein.

2. Vorrichtung zur Reinigung (1) eines optischen Sensors (3) nach dem vorhergehenden Anspruch, **dadurch gekennzeichnet, dass** sie einen Träger (6) der Düse zur Verteilung (5) der Reinigungsflüssigkeit aufweist, wobei der Träger (6) bezogen auf die Vorrichtung zur Reinigung (1) fest angeordnet ist.

3. Vorrichtung zur Reinigung (1) eines optischen Sensors (3) nach Anspruch 2, **dadurch gekennzeichnet, dass** die Düse zur Verteilung (5) der Reinigungsflüssigkeit in dem Träger (6) zwischen folgenden Positionen bewegbar angebracht ist:
- einer Ruheposition, in der die Düse zur Verteilung (5) dafür eingerichtet ist, bezogen auf eine Optik (4) des optischen Sensors (3) zurückgezogen zu sein, und
- einer aktiven Position, in der die Düse zur Verteilung (5) dafür eingerichtet ist, über der Optik (4) des optischen Sensors (3) gelegen zu sein, um den mindestens einen Tropfen Reinigungsflüssigkeit durch die Schwerkraft auf die Optik (4) aufzutragen.

4. Vorrichtung zur Reinigung (1) nach einem der vorhergehenden Ansprüche, **dadurch gekennzeichnet, dass** die Vorrichtung zur Reinigung (1) eine Dosierpumpe (8) umfasst, die dafür eingerichtet ist, die Düse zur Verteilung (5) mit Reinigungsflüssigkeit zu versorgen, um ein vorbestimmtes Volumen an Reinigungsflüssigkeit tropfenweise auf den optischen Sensor (3) aufzutragen.

5. Vorrichtung zur Reinigung (1) eines optischen Sensors (3) nach einem der vorhergehenden Ansprüche, **dadurch gekennzeichnet, dass** das Blaselement (7) eine Düse zum Blasen (13) eines Druckluftstroms umfasst, die dafür eingerichtet ist, einen Druckluftstrom auf die Optik (4) zu blasen, wenn sich das Blaselement (7) in einer Reinigungsposition befindet.

6. Vorrichtung zur Reinigung (1) eines optischen Sensors (3) nach einem der vorhergehenden Ansprüche, **dadurch gekennzeichnet, dass** die Vorrichtung zur Reinigung (1) einen Antriebsmechanismus (21, 23) umfasst, der dafür eingerichtet ist, das Blaselement (7) zwischen seiner eingefahrenen Position und der mindestens einen Reinigungsposition zu bewegen.

7. Vorrichtung zur Reinigung (1) nach einem der vorhergehenden Ansprüche, **dadurch gekennzeichnet, dass** das Blaselement (7) zwischen seiner eingefahrenen Position und der mindestens einen Reinigungsposition drehbeweglich ist.

8. Fahrassistenzsystem (10) umfassend mindestens eine Vorrichtung zur Reinigung (1) nach einem der vorhergehenden Ansprüche, mindestens einen optischen Sensor (3) und mindestens eine elektronische Steuerungseinheit (35), die dafür eingerichtet ist, die Vorrichtung zur Reinigung (1) zu steuern.

9. Fahrassistenzsystem (10) nach Anspruch 8 in Kombination mit Anspruch 6, **dadurch gekennzeichnet, dass** die elektronische Steuerungseinheit (35) dafür eingerichtet ist, den Antriebsmechanismus (21, 23) zu steuern, um das Blaselement (7) zwischen seiner eingefahrenen Position und der mindestens einen Reinigungsposition zu bewegen.

10. Fahrassistenzsystem (10) nach einem der Ansprüche 8 oder 9, **dadurch gekennzeichnet, dass** die elektronische Steuerungseinheit (35) dafür eingerichtet ist, das Blasen des Druckluftstroms auf die Optik (4) auszulösen, wenn sich das Blaselement (7) in einer Reinigungsposition befindet, und das Blasen des Druckluftstroms anzuhalten, wenn sich das Blaselement (7) in der eingefahrenen Position befindet.

11. Fahrassistenzsystem (10) nach Anspruch 10, **dadurch gekennzeichnet, dass** die elektronische Steuerungseinheit (35) dafür eingerichtet ist, den Blasdruck des Druckluftstroms auf die Optik (4) des optischen Sensors (3) zu steuern.

12. Fahrassistenzsystem (10) nach einem der Ansprüche 8 bis 11 in Kombination mit Anspruch 3, **dadurch gekennzeichnet, dass** die elektronische Steuerungseinheit (35) dafür eingerichtet ist, das Volumen an Reinigungsflüssigkeit zu steuern, das von der Dosierpumpe (8) angesaugt wird und tropfenweise auf die Optik (4) des optischen Sensors (3) aufgetragen wird.

13. Verfahren zur Reinigung eines optischen Sensors (3) eines Fahrassistenzsystems (10) nach einem der Ansprüche 8 bis 12, **dadurch gekennzeichnet, dass** es die folgenden Schritte umfasst:
- Inbewegungversetzen des Blaselements (7), um das Blaselement (7) in mindestens eine Reinigungsposition zu bringen,
- Auftragen mindestens eines ersten Tropfens Reinigungsflüssigkeit auf die Optik (4) des optischen Sensors (3), und
- Blasen eines ersten Druckluftstroms auf die Optik (4) .

14. Verfahren zur Reinigung eines optischen Sensors (3) nach dem vorhergehenden Anspruch, **dadurch gekennzeichnet, dass** es ferner die folgenden Schritte umfasst:
- Auftragen mindestens eines zweiten Tropfens Reinigungsflüssigkeit auf die Optik (4) des optischen Sensors (3),
- Blasen eines zweiten Druckluftstroms auf die Optik (4) des optischen Sensors (3), wobei der zweite Druckluftstrom mit einem Druck geblasen wird, der kleiner als jener des ersten Druckluftstroms ist, und
- Inbewegungversetzen des Blaselements (7), um das Blaselement (7) aus der mindestens einen Reinigungsposition zu der eingefahrenen Position zu bringen.

15. Vorrichtung zur Reinigung nach einem der Ansprüche 13 oder 14, **dadurch gekennzeichnet, dass** die Reinigungsflüssigkeit ein Zusatzmittel umfasst, das dafür eingerichtet ist, eine Schutzschicht auf die Optik (4) aufzutragen, um die Reinigung dieser Optik (4) zu erleichtern.

## Claims

1. Device (1) for cleaning an optical sensor (3), in particular intended to equip a motor vehicle, comprising a nozzle (5) for dispensing a cleaning liquid, the cleaning liquid dispensing nozzle (5) is a drip dispensing nozzle and is configured to deposit the cleaning liquid on the optical sensor (3) in individual drops, **characterised in that** the cleaning device (1) further comprises a spray element (7) movable between:
- a stowed position in which the spray element (7) is configured to be positioned outside the field of view of the optical sensor (3), and
- at least one cleaning position in which the spray element (7) is configured to be positioned in front of the optical sensor (3).

2. Device (1) for cleaning an optical sensor (3) according to the preceding claim, **characterised in that** it comprises a support (6) for the cleaning liquid dispensing nozzle (5), said support (6) being arranged in a fixed manner relative to the cleaning device (1).

3. Device (1) for cleaning an optical sensor (3) according to Claim 2, **characterised in that** the cleaning liquid dispensing nozzle (5) is mounted movable in the support (6) between:
- a rest position in which the dispensing nozzle (5) is configured to be retracted relative to an optical element (4) of the optical sensor (3), and
- an active position in which the dispensing nozzle (5) is configured to be located above the optical element (4) of the optical sensor (3) so as to deposit said at least one drop of cleaning liquid on the optical element (4) by gravity.

4. Cleaning device (1) according to any one of the preceding claims, **characterised in that** the cleaning device (1) comprises a metering pump (8) configured to supply the dispensing nozzle (5) with cleaning liquid in order to deposit a predefined volume of cleaning liquid on the optical sensor (3) in drips.

5. Device (1) for cleaning an optical sensor (3) according to any one of the preceding claims, **characterised in that** the spray element (7) comprises a nozzle (13) for spraying a compressed air flow configured to spray a compressed air flow over the optical element (4) when the spray element (7) is in a cleaning position.

6. Device (1) for cleaning an optical sensor (3) according to any one of the preceding claims, **characterised in that** the cleaning device (1) comprises a drive mechanism (21 and 23) configured to move the spray element (7) between its stowed position and said at least one cleaning position.

7. Cleaning device (1) according to any one of the preceding claims, **characterised in that** the spray element (7) is movable in rotation between its stowed position and said at least one cleaning position.

8. Driver assistance system (10) comprising at least one cleaning device (1) according to any one of the preceding claims, at least one optical sensor (3), and at least one electronic control unit (35) configured to control the cleaning device (1).

9. Driver assistance system (10) according to Claim 8 in combination with Claim 6, **characterised in that** the electronic control unit (35) is configured to control the drive mechanism (21 and 23), so to move the spray element (7) between its stowed position and said at least one cleaning position.

10. Driver assistance system (10) according to any one of Claims 8 or 9, **characterised in that** the electronic control unit (35) is configured to trigger the spraying of the compressed air flow over the optical element (4) when the spray element (7) is in a cleaning position and to stop said spraying of the compressed air flow when the spray element (7) is in the stowed position.

11. Driver assistance system (10) according to Claim 10, **characterised in that** the electronic control unit (35) is configured to control the pressure at which the compressed air flow is sprayed over the optical element (4) of the optical sensor (3).

12. Driver assistance system (10) according to any one of Claims 8 to 11 in combination with Claim 3, **characterised in that** the electronic control unit (35) is configured to control the volume of cleaning liquid drawn by the metering pump (8) and deposited in drips on the optical element (4) of the optical sensor (3).

13. Method for cleaning an optical sensor (3) of a driver assistance system (10) according to any one of Claims 8 to 12, **characterised in that** it comprises the following steps:
- moving the spray element (7) to bring said spray element (7) into at least one cleaning position,
- depositing at least one first drop of cleaning liquid on the optical element (4) of the optical sensor (3), and
- spraying a first compressed air flow over the optical element (4).

14. Method for cleaning an optical sensor (3) according to the preceding claim, **characterised in that** it comprises the following steps:
- depositing at least one second drop of cleaning liquid on the optical element (4) of the optical sensor (3),
- spraying a second compressed air flow, said second compressed air flow being sprayed at a pressure lower than that of the first compressed air flow, over the optical element (4) of the optical sensor (3), and
- moving the spray element (7) to bring said spray element (7) from said at least one cleaning position to the stowed position.

15. Cleaning method according to any one of Claims 13 or 14, **characterised in that** the cleaning liquid comprises an additive configured to deposit a protective layer on the optical element (4) in order to facilitate the cleaning of said optical element (4).
